Europäisches Patentamt

European Patent Office

Office européen des brevets

(11) Veröffentlichungsnummer: **0 075 707**
**B1**

(12) # EUROPÄISCHE PATENTSCHRIFT

(45) Veröffentlichungstag der Patentschrift:
26.02.86

(51) Int. Cl.⁴: **G 01 C 19/64**

(21) Anmeldenummer: 82107451.5

(22) Anmeldetag: 16.08.82

(54) Lichtwellenleiter-Ringinterferometer mit einer Einrichtung zur Bildung eines Quotientensignals.

(30) Priorität: 25.09.81 DE 3138317

(43) Veröffentlichungstag der Anmeldung:
06.04.83 Patentblatt 83/14

(45) Bekanntmachung des Hinweises auf die Patenterteilung:
26.02.86 Patentblatt 86/9

(84) Benannte Vertragsstaaten:
FR GB

(56) Entgegenhaltungen:
FR - A - 1 390 351
FR - A - 2 465 202

(73) Patentinhaber: Siemens Aktiengesellschaft, Berlin und München Wittelsbacherplatz 2, D-8000 München 2 (DE)

(72) Erfinder: Leeb, Walter, Dr., Mondweg 4/1/3, A-1140 Wien (AT)
Erfinder: Schiffner, Gerhard, Dr., Mozartstrasse 56, D-8012 Ottobrunn (DE)

## Beschreibung

Die Erfindung bezieht sich auf ein Lichtwellenleiter-Ringinterferometer mit einer Einrichtung zur Bildung eines Quotientensignals nach dem Oberbegriff des Patentanspruchs 1.

Ein Ringinterferometer der eingangs genannten Art ist aus der DE—A—29 36 269 bekannt. Bei diesem Ringinterferometer wird durch die Einrichtung zur Bildung des Quotientensignals aus den Signalen aus den optoelektronischen Sensoren erreicht, daß Lichtleistungs- oder Dämpfungsänderungen in den optischen Komponenten des Interferometer keinen Einfluß mehr auf die Meßwerte ausüben können.

Das Quotientensignal hängt zumindest annähernd von einer ins Quadrat erhobenen Tangensfunktion der Winkelgeschwindigkeit ab, mit welcher sich das Ringinterferometer dreht. Eine ungünstige Eigenschaft der Tangensfunktion liegt darin, daß sie bei bestimmten Stellen, d.h. bei bestimmten Winkelgeschwindigkeiten unendlich wird. Da die quadratische Tangensfunktion durch Quotientenbildung erzeugt wird, bedeutet dies mit anderen Worten, daß das Signal, welches den Divisor bildet, bei solchen Unendlichkeitsstellen null wird, was bedeutet, daß die Einrichtung zur Bildung des Quotientensignals zu einer mathematisch unerlaubten Division durch null fähig sein oder eine derartige Division ausschließen müßte.

Die Aufgabe der Erfindung besteht nun darin, ein Ringinterferometer der eingangs genannten Art dahingehend zu verbessern, daß bei der Bildung des Quotientensignals eine Division durch null von vornherein ausgeschlossen ist und daß die Eigenschaft des Interferometers, daß Lichtleistungs- oder Dämpfungsänderungen keinen Einfluß auf das Quotientensignal ausüben können, voll erhalten bleibt.

Diese Aufgabe wird bei einem Ringinterferometer der eingangs genannten Art durch die im kennzeichnenden Teil des Patentanspruchs 1 angegebenen Merkmale gelöst.

Da nunmehr bei der Bildung des Quotientensignals das Summensignals als Divisor verwendet wird und dieses Summensignal nie null werden kann, ist eine Division durch null von vornehrein ausgeschlossen. Darüber hinaus fallen aber weiterhin die Lichtleistung und Dämpfungen, die in unvorhersehbarer Weise schwanken können, bei der Bildung des Quotientensignals weiterhin heraus.

Eine besonders vorteilhafte Weiterbildung des Ringinterferometers nach Anspruch 1 geht aus dem Anspruch 2 hervor. Durch die Einrichtung zur Veränderung des Signalpegels des von einem optoelektronischen Sensor abgegebenen Signals gelingt es, die Pegel der von den optoelektronischen Sensoren abgegebenen Signale relativ zueinander so einzustellen, daß das Summensignal unabhängig von der Winkelgeschwindigkeit des Interferometers wird und das Quotientensignal ist dann proportional zu einer ins Quadrat erhobenen Kosinusfunktion von der Winkelgeschwindigkeit.

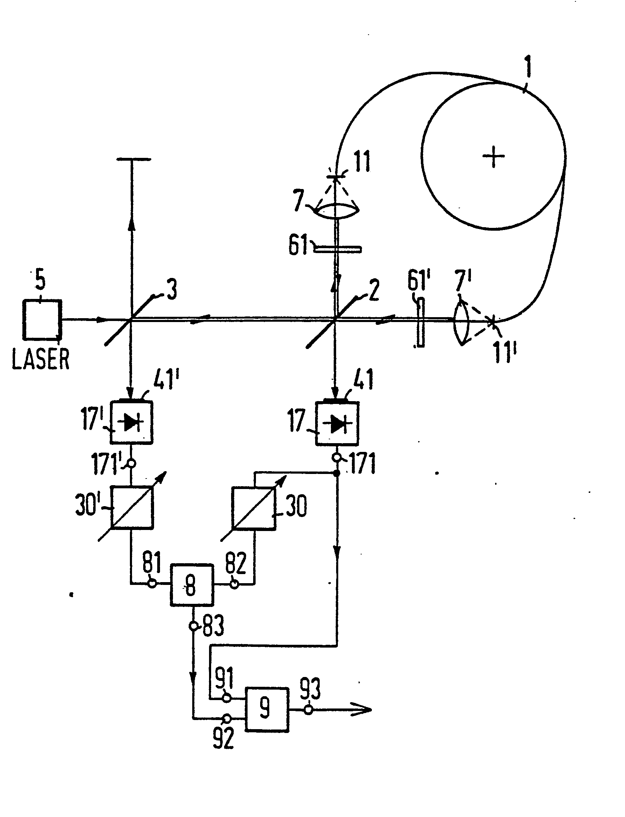

Die Erfindung wird anhand der Figur in der folgenden Beschreibung näher erläutert.

Die Figur zeigt in schematischer Darstellung ein Ringinterferometer gemäß der DE—A—29 36 269, welches erfindungsgemäß weitergebildet ist.

Das in der Figur dargestellte Ringinterferometer weist eine Lichtquelle 5, z.B. einen Laser, zwei teildurchlässige Spiegel 3 und 2, zwei Linearpolarisatoren 61 und 61', zwei Optiken 7 und 7', den Lichtwellenleiter 1 mit den beiden Enden 11 und 11', welches die Koppelstellen bilden, zwei optoelektronische Sensoren 17 und 17' und eine an diese Sensoren gekoppelte Einrichtung 9 zur Bildung des Quotientensignals auf. Soweit ist das dargestellte Ringinterferometer aus der DE—A—29 36 269 bekannt. Die Funktionsweise des bekannten Interferometers ist dieser Druckschrift entnehmbar. Für das vorliegende ist nur wesentlich, daß die auf die Sensorflächen 41 bzw. 41'der Sensoren 17 bzw. 17' auftreffenden Lichtleistungen gegeben sind durch

$$P_{41} = P_{\bullet}\, a\, (1 - b \cos^2 \varphi) \text{ bzw } P_{41'} = P_{\bullet}\, ab\, R_3 \cos^2 \varphi$$

worin $P_{\bullet}$ die von der Quelle 5 kommende und auf den Strahlteiler 2 auftreffende Lichtleistung darstellt, die gegeben ist durch die von der Lichtquelle 5 abgegebene Lichtleistung multipliziert mit der Durchlässigkeit des Strahlteilers 3. b ist gegeben durch $b = 4R(1 - R)$, wobei R der auf die Lichtleistung bezogene Reflexionsfaktor des Strahlteilers 2 bedeutet, und vorausgesetzt ist, daß beide Strahlteiler 2 und 3 als praktisch verlustfrei angenommen sind. a ist die Durchlässigkeit des aus einer Faserspule bestehenden Lichtwellenleiters 1 unter Berücksichtigung der beiden vorgeschalteten Polarisationsfilter 61 und 61'. $\varphi$ ist gegebenen durch $\varphi = 4 \cdot \pi \cdot \Omega AN/c \cdot \lambda$, wobei $\Omega$ die Winkelgeschwindigkeit, A die Spulenfläche, N die Windungszahl der Spule, c die Lichtgeschwindigkeit im Vakuum und die Vakuumwellenlänge der von der Quelle 5 abgegebenen Lichtstrahlung bedeuten. Schließlich bedeutet $R_3$ den auf die Lichtleistung bezogenen Reflexionsfaktor des Strahlteilers 3.

Das am Ausgang 171 des Sensors 17 erscheinende Ausgangssignal ist der Lichtleistung $P_{41}$ proportional und wird einem Eingang 91 der Einrichtung 9 zur Bildung des Quotientensignals zugeführt. Dieser Eingang 91 ist für das den Dividenden bildende Signal bestimmt.

Das am Ausgang 171' des Sensors 17' erscheinende Ausgangssignal ist der Lichtleistung $P_{41'}$ proportional. Bei dem Ringinterferometer nach der DE—A—29 36 269 ist dieses Ausgangssignal direkt einem zweiten Eingang 92 der Einrichtung 9 zugeführt, der für das den Divisor bildende Signal bestimmt ist. Das von der Einrichtung 9 aus den Signalen an den Eingängen 91 und 92 gebildete Quotientensignal ist dem Ausgang 93 dieser Einrichtung entnehmbar.

Bei dem hier beschriebenen Ringinterferometer wird nur das den Dividenden bildende Signal aus dem Ausgang 171 des Sensors 17 direkt dem Eingang 91 der Einrichtung 9 zugeführt. Dem Eingang 92 wird ein Summensignal zugeführt, das der Summe der beiden Signale aus den Ausgängen 171 und 171' der beiden Sensoren 17 bzw. 17' proportional ist. Zu diesem Zweck ist die Einrichtung 8 zur Bildung des Summensignals vorgesehen, dem über einen Eingang 81 das Signal aus dem Ausgang 171' und über einen Eingang 82 das Signal aus dem Ausgang 171 zugeführt sind. Das Summensignal ist einem Ausgang 83 der Einrichtung 8 entnehmbar und wird dem Eingang 92 der Einrichtung 9 zugeführt.

Der Sinn und Zweck dieser Maßnahme ergibt sich aus folgendem. Wenn der Reflexionsverlust am Strahlteiler 3 berücksichtigt wird, dann ist die Summe der auf die beiden Sensorflächen 41 und 41' der Sensoren 17 und 17' auftreffenden Leistungen gegeben durch

$$P_{41} + P_{41}·/R_3 = P_e·a$$

d.h. die Summe der Leistungen ist unabhängig von $\varphi$ und damit der Winkelgeschwindigkeit $\Omega$. Bildet man die Verhältnisse

$$P_{41}/(P_{41} + P_{41}·/R_3) = 1 - b \cos^2$$
$$\varphi = 1 - b + b·\sin^2 \varphi$$

$$P_{41}·/(P_{41} + P_{41}·/R_3) = b·R_3 \cos^2 \varphi$$

so sieht man, daß die Größen $P_e$ und a, die in unvorhersehbarer Weise schwanken können, herausfallen. Außerdem wird der Nenner oder Divisor dieser Verhältnisse nie null.

Unter der Annahme, daß die von den Sensoren 17 bzw. 17' abgegebenen Signale proportional zu den Lichtleistungen $P_{41}$ bzw. $P_{41}·$ und daß die Proportionalitätsfaktoren für beide Sensoren gleich sind, gilt, daß das Summensignal aus der Einrichtung 8 proportional zur Lichtleistungssumme $P_{41} + P_{41}·/R_3 = P_e · a$ und damit stets ungleich null und außerdem unabhängig von $\varphi$ ist. Außerdem ist unmittelbar zu erkennen, daß das Quotientensignal, das einem der beiden Verhältnisse $P_{41}/(P_{41} + P_{41} 10/R_3)$ oder $P_{41}·/(P_{41} + P_{41}·/R_3)$ entspricht, unabhängig von $P_e$ und a, also unabhängig von der Lichtleistung und der Durchlässigkeit der Faserspule und der Polarisationsfilter ist, die beide in unvorhersehbarer Weise schwanken können.

Die in der Figur dargestellte Ausführungsform erzeugt ein Quotientensignal, welches dem Verhältnis $P_{41}/(P_{41} + P_{41}·/R_3)$ entspricht. Bei einer Ausführungsform, die ein Quotientensignal erzeugt, das dem anderen Verhältnis $P_{41}·/(P_{41} + P_{41}·/R_3)$ entspricht, ist nicht der Ausgang 171 des Sensors 17, sondern der Ausgang 171' des Sensors 17' mit dem Eingang 91 für das den Dividenden bildende Signal verbunden. Alles übrige kann unverändert bleiben.

Die Sensoren 17 und 17' werden im allgemeinen nicht genau die gleiche Empfindlichkeit aufweisen, d.h. bei gleicher zugeführter Leistung werden die von den beiden Sensoren abgegebenen Signale verschiedene Signalpegel aufweisen. Dies führt dazu, daß das von der Einrichtung 8 abgegebene Summensignal zwar nie null, aber doch von $\varphi$ abhängig wird. Um dies zu vermeiden, genügt es, zwischen einem der Sensoren 17 bzw. 17' und der Einrichtung 8 eine Einrichtung zur Veränderung des Signalpegels des von diesem Sensor abgegebenen Signals vorzusehen, mit welcher der Signalpegel dem Signalpegel des von de manderen Sensor abgegebenen Signals so angepaßt werden kann, daß das Summensignal unabhängig von $\varphi$ und damit proportional dem Produkt $P_e · a$ wird.

Obwohl eine einzige Einrichtung zur Veränderung des Signalpegels ausreicht, sind in der Figur zwei derartige Einrichtungen 30 und 30' vorgesehen. Die Einrichtung 30 ist zwischen den Ausgang 171 des Sensors 17 und den Eingang 82 der Einrichtung 8 geschaltet, während die Einrichtung 30' zwischen den Ausgang 171' des Sensors 17' und den Eingang 81 der Einrichtung 8 geschaltet ist.

**Patentansprüche**

1. Ringinterferometer mit einem Lichtwellenleiter (1), der zwei, getrennte Koppelstellen (11, 11') aufweist, über die jeweils Licht in den Lichtwellenleiter (1) einkoppelbar ist, das sich in ihm zur jeweils anderen Koppelstelle (11, 11') hin ausbreitet und dort wieder auskoppelbar ist, wobei ein Anteil des über die eine Koppelstelle (11) ausgekoppelten Lichts und ein Anteil des über die andere Koppelstelle (11') ausgekoppelten Lichts überlagert einem optoelektronischen Sensor (17) zugeführt sind, wobei ein anderer Anteil des über die ein Koppelstelle (11) ausgekoppelten Lichts und ein anderer Anteil des über die andere Koppelstelle (11') ausgekoppelten Lichts überlagert einem anderen optoelektronischen Sensor (17') zugeführt sind, wobei eine Einrichtung (9) zur Bildung eines Quotientensignals aus Signalen vorgesehen ist, die von den beiden optoelektronischen Sensoren (17, 17') erzeugt sind und wobei das von einem (17) der Sensoren erzeugte Signal der Einrichtung (9) zur Bildung des Quotientensignals als ein den Dividenden bildendes Signal zugeführt ist, gekennzeichnet durch eine Einrichtung (8) zur Bildung eines Summensignals aus den von den Sensoren (17, 17') erzeugten Signalen, das der Summe dieser Signale proportional ist und das der Einrichtung (9) zur Bildung des Quotientensignals als ein den Divisor bildendes Signal zugeführt ist.

2. Ringinterferometer nach Anspruch 1, dadurch gekennzeichnet, daß eine Einrichtung (30, 30') zur Veränderung des Signalpegels der von wenigstens einem der Sensoren (17, 17') abgebenen Signale vorgesehen ist.

**Revendications**

1. Interféromètre en anneau comportant un guide d'on des de lumière (1), qui comporte deux points de couplage séparés (11,11') par l'intermédiaire desquels peut être respectivement injectée par couplage, dnas le guide d'ondes de lumière (1), une lumière qui se propage dans ce guide d'ondes en direction de l'autre point de couplage respectif (11,11') et peut être extraite par dé couplage en ce point, et dans lequel une composante de la lumière extraite par découplage par l'intermédiaire du premier point de couplage (11) et une composante de la lumière extraite par découplage par l'intermédiaire de l'autre point de couplage (11') sont envoyées, en étant superposées, à un capteur opto-électronique (17) et dans lequel une autre composante de la lumière extraite par découplage par l'intermédiaire du premier point de couplage (11) et une autre composante de la lumière, extraite par découplage par l'intermédiaire de l'autre point de couplage (11') sont envoyées, en étant superposées, à un autre capteur opto-électronique (17'), et dans lequel ist est prévu un dispositif (9) pour former un signal de quotient à partir des signaux qui sont produits par les deux capteurs opto-électroniques (17,17') est envoyé, en tant que signal formant le dividende, au dispositif (9) servant à former le signal de quotient, caractériseé par un dispositif (8) servant à former un signal somme à partir des signaux produits par les capteurs (17, 17') et qui est proportionnel à la somme de ces signaux et qui est envoyé en tant que signal formant le diviseur, au dispositif (9) servant à former le signal de quotient.

2. Interféromètre en anneau selon la revendication 1, caractérisé par le fait qu'il est prévu un dispositif (30, 30) servant à modifier le niveau des signaux délivrés par au moins l'un des capteurs (17, 17').

## Claims

1. A ring interferometer having a light waveguide (1), which possesses two separate coupling points (11, 11'), by means of which respective light coupled into the light waveguide (1) scatters in the light waveguide towards the respective other coupling point (11, 11'), to be output coupled, wherein a portion of the light output coupled from one coupling point (11) and a portion of the light output coupled from the other coupling point (11') are passed together to an opto-electronic sensor (17) in superimposed fashion, wherein another portion of the light output coupled from the one coupling point (11) and another portion of the light output coupled from the other coupling point (11'), are passed together to another opto-electronic sensor (17') in superimposed fashion, wherein a device (9) is arranged for forming a quotient from signals produced by the two opto-electric sensors (17, 17') and wherein the signal which is produced by one (17) of the sensors is fed to the device (9) for forming the quotient signal as a signal which forms the dividend, characterised by a device (8) for forming a sum signal from the signals which are produced by the sensors (17, 17'), which sum signal is proportional to the sum of these signals and is fed to the device (9) for forming the quotient signal as a signal which forms the divisor.

2. A ring interferometer as claimed in Claim 1, characterised in that a device (30, 30') is provided for changing the signal level of the signals transmitted by at least one of the sensors (17, 17').